# EUROPÄISCHE PATENTSCHRIFT

(11) **EP 0 685 394 B1**
(45) Veröffentlichungstag und Bekanntmachung des Hinweises auf die Patenterteilung: **19.08.1998**
(21) Anmeldenummer: 95107295.8
(22) Anmeldetag: 13.05.1995
(51) Int. Cl.: B65B 35/58, B65G 47/244

(54) **Einrichtung zum Verschliessen einer Faltschachtel**
Apparatus for closing a foldable box
Appareil pour fermer une boîte pliante

(30) Priorität: 01.06.1994 DE 4419150
(43) Veröffentlichungstag der Anmeldung: 06.12.1995
(73) Patentinhaber: 4P Nicolaus Kempten GmbH, D-87437 Kempten (DE)
(72) Erfinder: Franta, Georg, D-87634 Obergünzburg (DE)
(74) Vertreter: Hutzelmann, Gerhard

(56) Entgegenhaltungen:
- EP-A- 0 369 777
- WO-A-92/18388

## Beschreibung

Die Erfindung bezieht sich auf eine Einrichtung zum Verschließen einer Faltschachtel mit einem Deckel, wobei eine Vorrichtung zum Auffalten und/oder Befestigen wenigstens einer Deckelseite bzw. Deckelkante vorgesehen ist, an die eine Dreheinrichtung der Faltschachtel anschließt, auf die eine weitere Falt- und/oder Verschließvorrichtung für weitere Deckelseiten bzw. Deckelkanten folgt, wobei in der Dreheinrichtung mehrere parallel zueinander angeordnete und quer zur Transportrichtung verlaufende, vorzugsweise angetriebene Transportwalzen vorgesehen sind, auf denen die Faltschachtel transportiert wird, und wobei seitlich neben den Transportwalzen in die Transportbahn eingreifende Hebel vorgesehen sind, welche mit einer gegenüber der Umfangsgeschwindigkeit der angetriebenen Transportwalzen niedrigeren Geschwindigkeit antreibbar sind, und wobei die Hebel an einer umlaufend angeordneten Kette befestigt sind, die entlang der Transportbahn parallel zu dieser verläuft, und wobei die Hebel als Kipphebel ausgebildet sind, die sich bei ihrem Umlauf auf einer Führungsbahn abstützen.

Beim Verschließen und auch beim Auffalten hat es sich als vorteilhaft erwiesen, wenn die Bearbeitung von der Maschinen-Längs-Seite her erfolgt. Dazu ist es aber notwendig die Faltschachtel während des gesamten Vorganges um 90° zu drehen.

Dazu sind in der Praxis zwar verschiedene Dreheinrichtungen bekannt, die aber weder in der Zuverlässigkeit noch in der möglichen Geschwindigkeit befriedigen.

Aus EP-A-0 369 777 und WO-A-92 18 388 sind Einrichtungen der eingangs genannten Art zum Verschließen einer Faltschachtel mit einem Deckel bekannt die an einer umlaufenden Kette angeordnete und in die Transportbahn eingreifende Kipphebel aufweisen. Diese Hebel sind gegenüber den Transportwalzen mit einer niedrigeren Geschwindigkeit antreibbar.

Der Erfindung liegt die Aufgabe zugrunde, eine Einrichtung der genannten Art zu schaffen, welche bei höheren Geschwindigkeiten zuverlässig arbeitet.

Diese Aufgabe wird erfindungsgemäß dadurch gelöst, daß die Führungsbahn derart mit Abstand zur die Hebel tragenden Kette angeordnet ist, daß sie im Bereich der Transportbahn ein Abkippen der Kipp-Hebel in eine verhältnismäßig flache Stellung erlaubt, während die Führungsbahn in ihrem weiteren Verlauf verhältnismäßig eng an der Kette angeordnet ist und die Hebel auf ihrem weiteren Weg nach oben umlenkt, und daß die Führungsbahn der Kipp-Hebel am Beginn der parallelen Strecke in Bezug auf die Transportbahn eine nach außen gerichtete Stufe aufweist, an welcher die Kipp-Hebel nach außen kippen.

Diese Kipp-Hebel greifen von der Seite her in die Transportbahn ein und erfassen die vordere Ecke der gerade ankommenden Faltschachtel. Durch die niedrigere Geschwindigkeit der Hebel wird diese Ecke abgebremst und dadurch die Faltschachtel gedreht. Dabei ist gewährleistet, daß die Hebel sicher in den Transportweg der Faltschachteln eingreifen und diese an ihrer Ecke abbremsen. Die Hebel kippen stets an der gewünschten Stelle in den Transportweg ein, wodurch keine Gefahr besteht, daß sie seitlich an den Faltschachteln angreifen. Durch die dabei erzwungene Kippbewegung der Kipphebel werden deren Lager sicher von Ablagerungen freigehalten. Durch die nach außen gerichtete Stufe wird eine plötzliche Beschleunigung der Kipphebel nach außen erzielt, wodurch ein sicheres Kippen gewährleistet ist.

Eine vorteilhafte Ausgestaltung der Erfindung liegt auch darin, daß die Hebel mit einem Lager (Gleit bzw. Wälzlager) versehen sind, mit welchem sie sich auf auf der Führungsbahn abstützen.

Eine weitere vorteilhafte Ausgestaltung der Erfindung ist dadurch gekennzeichnet, daß innerhalb des Transportweges der Kipphebel eine Abweisvorrichtung angeordnet ist, welche ein unbeabsichtigtes Nachinnenkippen der Kipphebel verhindert.

Dabei hat es sich als sehr günstig erwiesen, wenn erfindungsgemäß die Abweiseinrichtung mit einer nach außen gerichteten Steigung versehen ist, welche ein Nachaußenkippen der Kipphebel bei ihrem Umlauf bewirkt.

Festsitzende Lager der Kipphebel werden dadurch wieder gelöst und ein Nachaußenkippen der Kipphebel sichergestellt.

In der Zeichnung ist die Erfindung anhand eines Ausführungsbeispiels veranschaulicht. Dabei zeigen:
- Fig. 1: eine schematische Ansicht einer Dreheinrichtung mit an einer Kette gelagerten Kipphebeln,
- Fig.2: eine Kipphebel-Lagerung in vergrößertem Maßstab und
- Fig.3: eine Ansicht einer inneren Abweisvorrichtung für die Kipphebel.

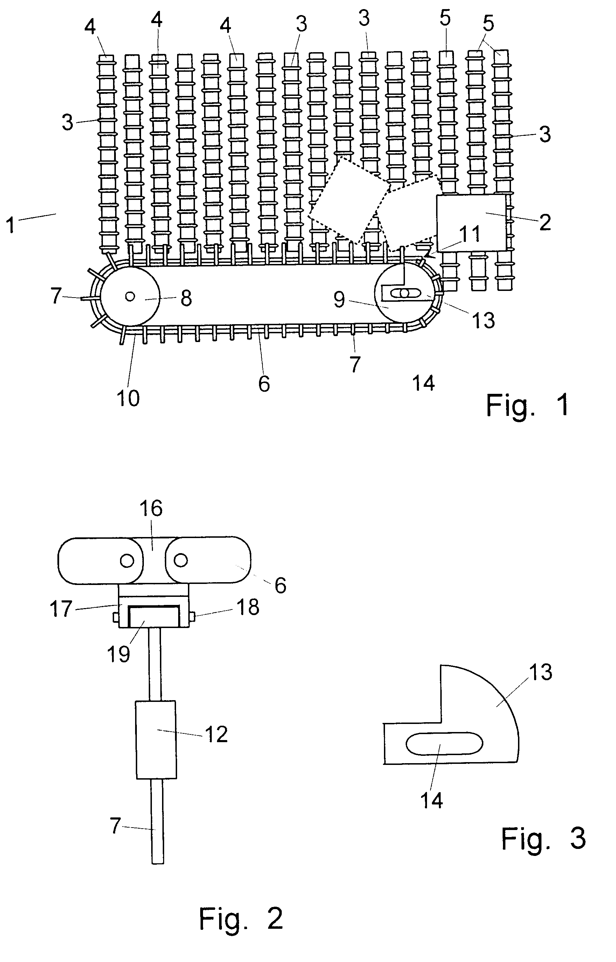

Mit 1 ist in Fig. 1 eine nicht näher dargestellte Einrichtung zum Verschließen einer Faltschachtel 2 bezeichnet, wobei diese Faltschachtel zum Verschließen mit einem Deckel während dieses Vorganges um 90° gedreht wird. Hierzu ist eine Dreheinrichtung vorgesehen, in der mehrere, parallel zueinander verlaufende Transportwalzen 4 und 5 angeordnet sind. Diese Transportwalzen sind mit versetzt zueinander angeordneten Umfangsringen 3 versehen, die entsprechend der Form und Größe der Faltschachteln auf den Transportwalzen verteilt angeordnet sind und aus einem Material bestehen, welches eine günstige Haftreibung gegenüber dem Material der Faltschachtel aufweist. Seitlich neben den Transportwalzen 4 ist eine umlaufend gelagerte Kette 6 vorgesehen, an der Hebel 7 kippbar gelagert sind, die in den Transportweg der Faltschachteln eingreifen. Die Kette 6 ist einerseits auf einem Antriebskettenrad 8 und andererseits auf einem drehbar angeordneten Rad 9 gelagert und in ihrer Geschwindigkeit einstellbar. Um diese Kette 6 verläuft eine Führungsbahn 10, auf der sich die Kipp-Hebel 7 in ihrer nach außen gekippten Lage abstützen. Der Abstand von Kette und Führungsbahn ist dabei so eingestellt, daß die Kipp-Hebel 7 in ihrer den Transportwalzen 4 zugekehrten Position nahezu waagerecht verlaufen und auf ihrem weiteren Weg nach oben umgelenkt werden. Unmittelbar vor der zur durch die Transportwalzen 4 gebildeten Transportstrecke parallelen Strecke der Führungsbahn 10 ist eine Stufe 11 vorgesehen, an welcher die Kipp-Hebel 7 nach außen kippen. Die Kipp-Hebel 7 sind im Bereich ihrer Abstützung an der Führungsbahn 10 mit einem Lagerring 12 versehen, der aus Sintermaterial besteht, das verschleißfest ist und gegenüber dem Kipp-Hebel einen geringen Reibungskoeffizienten aufweist. Anstelle dieses Lagerringes ist auch die Anordnung eines Kugellagers denkbar, wobei jedoch eine aufwendige Abdichtung notwendig ist. Im Bereich der Stufe 11 der Führungsbahn 10 ist auf der Innenseite eine Abweisvorrichtung 13 vorgesehen, die mit Hilfe einer langlochförmigen Lagerung 14 verstellbar angeordnet ist. Diese Abweisvorrichtung 13 sichert, daß die Kipp-Hebel 7 wenigstens im Bereich der Stufe 11 an der Führungsbahn anliegen. Zusätzlich kann diese Abweisvorrichtung auch so ausgebildet sein, daß die Kipp-Hebel 7 von ihr in die Stufe hineingedrückt werden. Zur Befestigung des jeweilige Kipp-Hebels 7 an der Kette 6 ist an jeweils einem Kettenglied 16 ein U-förmiges Lagerstück 17 angebracht. Durch die beiden freien Anne des U-förmigen Lagerstücks 17 ist eine Achse 18 gesteckt, auf welcher der eigentliche Kipp-Hebel 7 mit einem Lagerfuß 19 gelagert ist.

Die Kette 6 wird langsamer angetrieben als die auf den Transportwalzen 4, 5 herangeführte Faltschachtel 2. Dadurch läuft diese mit ihrer linken Vorderkante an einen ausgeklappten Kipp-Hebel 7 an und wird entgegen dem Uhrzeigersinn gedreht, wie dies in Fig. 1 angedeutet ist. Die nachfolgenden Kipp-Hebel schlagen gleichzeitig bei ihrem Herauskippen an die Seitenwand der Faltschachtel und unterstützen diese Drehbewegung.

## Patentansprüche

1. Einrichtung zum Verschließen einer Faltschachtel(2) mit einem Deckel, wobei eine Vorrichtung zum Auffalten und/oder Befestigen wenigstens einer Deckelseite bzw. Deckelkante vorgesehen ist, an die eine Dreheinrichtung der Faltschachtel anschließt, auf die eine weitere Falt- und/oder Verschließvorrichtung für weitere Deckelseiten bzw. Deckelkanten folgt,wobei in der Dreheinrichtung mehrere parallel zueinander angeordnete und quer zur Transportrichtung verlaufende, vorzugsweise angetriebene Transportwalzen(4,5) vorgesehen sind, auf denen die Faltschachtel(2) transportiert wird, und wobei seitlich neben den Transportwalzen in die Transportbahn eingreifende Hebel(7) vorgesehen sind, welche mit einer gegenüber der Umfangsgeschwindigkeit der angetriebenen Transportwalzen niedrigeren Geschwindigkeit antreibbar sind, und wobei die Hebel(7) an einer umlaufend angeordneten Kette(6) befestigt sind, die entlang der Transportbahn parallel zu dieser verläuft, und wobei die Hebel(7) als Kipphebel ausgebildet sind, die sich bei ihrem Umlauf auf einer Führungsbahn(10) abstützen, **dadurch gekennzeichnet,** daß die Führungsbahn(10) derart mit Abstand zur die Hebel tragenden Kette angeordnet ist, daß sie im Bereich der Transportbahn ein Abkippen der Kipp-Hebel(7) in eine verhältnismäßig flache Stellung erlaubt, während die Führungsbahn in ihrem weiteren Verlauf verhältnismäßig eng an der Kette(6) angeordnet ist und die Hebel auf ihrem weiteren Weg nach oben umlenkt, und daß die Führungsbahn(10) der Kipp-Hebel(7) am Beginn der parallelen Strecke in Bezug auf die Transportbahn eine nach außen gerichtete Stufe(11) aufweist, an welcher die Kipphebel nach außen kippen.

2. Einrichtung nach Anspruch 1, **dadurch gekennzeichnet,** daß die Hebel(7) mit einem Lager(12) (Gleit bzw. Wälzlager) versehen sind, mit welchem sie sich auf auf der Führungsbann(10) abstützen.

3. Einrichtung nach Anspruch 1 oder 2, **dadurch gekennzeichnet,** daß innerhalb des Transportweges der Kipp-Hebel(7) eine Abweisvorrichtung(13) angeordnet ist, welche ein unbeabsichtigtes Nachinnenkippen der Kipp-Hebel verhindert.

4. Einrichtung nach Anspruch 3, **dadurch gekennzeichnet,** daß die Abweiseirrichtung(13) mit einer nach außen gerichteten Steigung versehen ist, welche ein Nachaußenkippen der Kipp-Hebel(7) bei ihrem Umlauf bewirkt.

## Claims

1. Unit for closing a folding carton (2) with a lid, in which a device for folding and/or attaching at least one lid panel or lid edge is provided, that is followed by a unit for turning the folding carton, which is in turn followed by another unit for folding and/or closing further lid panels or lid edges, where a number of transport rollers (4, 5) are provided that are located parallel to each other, extend at right angles to the direction of transport and are preferably driven, on which the folding carton (2) is transported, where levers (7) are provided at the side next to the transport rollers which project into the path of transport and can be driven at a lower speed than the circumferential speed of the driven transport rollers, where the levers (7) are attached to a circulating chain (6) that extends parallel to and alongside the path of transport and where the levers (7) are designed to be tipping levers that are supported on a guideway (10) while they circulate, **wherein** the guideway (10) is located at such a distance from the chain with the levers that it allows the tipping levers (7) to tip into a comparatively flat position in the area of the path of transport, while the rest of the guideway is located comparatively close to the chain (6) and moves the levers upwards as they continue to be transported, and **wherein** the guideway (10) for the tipping levers (7) is provided with a step (11) which projects outwards at the beginning of the section that is parallel to the path of transport and at which the tipping levers tip outwards.

2. Unit according to claim 1, **wherein** the levers (7) are provided with a bearing (12) (sleeve or roller bearing), with which they support themselves on the guideway (10).

3. Unit according to claim 1 or 2, **wherein** a deflection device (13) is located within the path of transport of the tipping levers (7) which makes sure that the tipping levers do not tip inwards unintentionally.

4. Unit according to claim 3, **wherein** the deflection device (13) is provided with an outwardly directed incline which makes sure that the tipping levers (7) tip outwards while they circulate.

## Revendications

1. Dispositif pour fermer une boîte pliante ou à rabats (2) avec un couvercle, un dispositif destiné a ouvrir par dépliage et/ou fixer au moins une face de couvercle ou une arête de couvercle étant prévu, dispositif auquel se raccorde un dispositif de pivotement de la boîte pliable, auquel fait suite un autre dispositif de pliage et/ou de fermeture destiné à d'autres faces de couvercle ou arêtes de couvercle, dans le dispositif de pivotement étant prévu plusieurs rouleaux de transport (4, 5) de préférence entraînés, disposés parallèlement entre eux et s'étendant transversalement par rapport a la direction de transport, rouleaux de transport sur lesquels les boîtes pliables (2) sont transportées et latéralement, a côté des rouleaux de transport, étant prévus des leviers (7) s'engageant dans la trajectoire de transport et susceptibles d'être entraînés a une vitesse inférieure par rapport a la vitesse périphérique des rouleaux de transport entraînés, les leviers (7) étant fixés sur une chaîne (6) mise en circulation, chaîne s'étendant le long de la trajectoire de transport parallélement par rapport a celle-ci, et les leviers (7) étant réalisés sous forme de leviers basculants qui prennent appui lors de leur circulation sur une piste de guidage(10), caractérisé en ce que la piste de guidage (10) est disposée a distance de la chaîne portant les leviers, de manière qu'elle permette dans la zone de la trajectoire de transport d'obtenir un basculement des leviers basculants (7) dans une position relativement à plat, tandis que la piste de guidage est disposée, dans la continuation de son évolution, en étant placée de façon proche de la chaîne (7), et les leviers étant retournés vers le haut lors de la continuation de leur course, et en ce que la piste de guidage (10) des leviers basculants (7) présente, au début de la course parallèle par rapport a la bande de transport, un étagement (11) orienté vers l'extérieur et sur lequel les leviers basculants basculent vers l'extérieur.

2. Dispositif selon la revendication 1, caractérisé en ce que les leviers (7) sont pourvus d'un palier (12) (palier à glissement ou à roulement), à l'aide duquel ils prennent appui sur les pistes de guidage (10).

3. Dispositif selon la revendication 1 ou 2, caractérisé en ce qu'à l'intérieur de la trajectoire de transport des leviers basculants (7) est disposé un dispositif de repoussement (13) qui empêche tout basculement postérieur vers l'intérieur des leviers basculants.

4. Dispositif selon la revendication 3, caractérisé en ce que le dispositif de repoussement (13) est pourvu d'une pente orientée vers l'extérieur, provoquant un basculement vers l'extérieur des leviers basculants (7) lorsqu'ils parcourent leur trajet de circulation.
